# EUROPÄISCHE PATENTSCHRIFT

(11) **EP 2 023 677 B1**
(45) Veröffentlichungstag und Bekanntmachung des Hinweises auf die Patenterteilung: **16.01.2013**
(21) Anmeldenummer: 08014049.4
(22) Anmeldetag: 06.08.2008
(51) Int. Cl.: H04L 12/58, H04W 4/14, H04L 29/12

(54) **Verfahren und Vorrichtung zur Übermittlung von Nachrichten in Telekommunikationsnetzen**
Method and device for transmission of messages in telecommunications networks
Procédé et dispositif pour la transmission d'informations dans un réseau de télécommunication

(30) Priorität: 10.08.2007 DE 102007038014
(43) Veröffentlichungstag der Anmeldung: 11.02.2009
(73) Patentinhaber: Vodafone Holding GmbH, 40213 Düsseldorf (DE)
(72) Erfinder: Hartl, Mike, 40878 Ratingen (DE); Bieniek, Rainer, 47178 Duisburg (DE)
(74) Vertreter: Weisbrodt, Bernd

(56) Entgegenhaltungen:
- EP-A2- 1 732 334
- WO-A1-02/060199
- US-A1- 2002 110 225
- US-A1- 2004 122 838

## Beschreibung

Die vorliegende Erfindung betrifft ein Verfahren zur Übermittlung von Nachrichten in Telekommunikationsnetzen, vorzugsweise Mobilfunknetzen gemäß einem GSM-, GPRS- und/oder UMTS-Funknetzstandard, mittels eines Nachrichtendienstes eines Telekommunikationsnetzes, wobei seitens wenigstens eines an der Nachrichtenübermittlung beteiligten Netzknotens des Telekommunikationsnetzes für jeden Nachrichtenempfänger einer einen Nachrichteninhalt und wenigstens eine Information zur Kontaktierung des Nachrichtenempfängers in einem Telekommunikationsnetz aufweisende Nachricht empfangen wird.

Gegenstand der vorliegenden Erfindung ist ferner ein Netzknoten in einem Telekommunikationsnetz, vorzugsweise einem Mobilfunknetz gemäß einem GSM-, GPRS- und/oder UMTS-Funknetzstandard, welcher an der Übermittlung von Nachrichten in dem Telekommunikationsnetz mittels eines Nachrichtendienstes des Telekommunikationsnetzes beteiligt ist und ausgebildet und/oder eingerichtet ist, ein erfindungsgemäßes Verfahren auszuführen.

Im Stand der Technik sind verschiedene Systeme, Verfahren und Vorrichtungen zur Übermittlung von Nachrichten in einem Telekommunikationsnetz, insbesondere ein Mobilfunknetz gemäß einem GSM- (GSM: Global System Mobile), GPRS- (General Paket Radio Service) und/oder UMTS-Funknetzstandard (UMTS: Universal Mobile Telecommunications System) bekannt, beispielsweise aus der EP 1 732 334 A2, WO 02/060199 A1, US 2002/0110225 A1 oder US 2004/0122838 A1.

Bei der Erstellung entsprechender Nachrichten seitens eines in einem Telekommunikationsnetz betreibbaren Endgerätes eines Nachrichtensenders kann dieser dabei über entsprechende Eingabeeinheiten und Editoren seitens des Endgerätes insbesondere eine für wenigstens zwei Nachrichtenempfänger bestimmte, einen Nachrichteninhalt und für jeden der Nachrichtenempfänger wenigstens eine Information zur Kontaktierung des Nachrichtenempfängers in einem Telekommunikationsnetz aufweisende Nachricht erstellen. Die entsprechend erstellte Nachricht wird dann von dem Endgerät an das Telekommunikationsnetz unter Nutzung des Nachrichtendienstes des Telekommunikationsnetzes gesendet. Nachteilig bei dieser Art von Gruppenkommunikation ist, dass entsprechende Nutzer sei es als Sender oder als Nachrichtenempfänger jeweils die Kontaktinformationen der Gruppenmitglieder einer entsprechenden als Gruppenkommunikation zu versendenden Nachricht für jedes Versenden von Nachrichten die Kontaktinformation der Gruppenmitglieder separat eingeben beziehungsweise erfassen müssen. Die Handhabung und/oder Nutzung einer entsprechenden Nachrichtenübermittlung als Gruppenkommunikation ist dementsprechend nutzerunfreundlich und unkomfortabel.

Von Nachteil ist desweiteren, dass entsprechende Gruppenkommunikationsanwendungen jeweils das Versenden einzelner Nachrichten an den jeweiligen Nachrichtenempfänger und somit die jeweiligen für die Nachrichtenübermittlung anfallenden Kosten für jeden Einzelfall bedingen.

Der Erfindung liegt in Anbetracht dieses Standes der Technik die Aufgabe zugrunde, die Übermittlung von Nachrichten in Telekommunikationsnetzen derart zu verbessern, dass ohne Änderungen seitens der von Nachrichtensendern und/oder Nachrichtenempfängern genutzten Endgeräte auf einfache und kostengünstige Art und Weise eine Nachrichtenübermittlung mit Gruppenkommunikationsfunktionalität realisierbar ist.

Zur technischen Lösung wird mit der vorliegenden Erfindung ein Verfahren zur Übermittlung von Nachrichten in Telekommunikationsnetzen, vorzugsweise Mobilfunknetzen gemäß einem GSM-, GPRS- und/oder UMTS-Funknetzstandard, mittels eines Nachrichtendienstes eines Telekommunikationsnetzes, wobei seitens wenigstens eines an der Nachrichtenübermittlung beteiligten Netzknotens des Telekommunikationsnetzes für jeden Nachrichtenempfänger einer einen Nachrichteninhalt und wenigstens eine Information zur Kontaktierung des Nachrichtenempfängers in einem Telekommunikationsnetz aufweisende Nachricht empfangen wird, vorgeschlagen, welches dadurch gekennzeichnet ist, dass seitens des Netzknotens anhand der empfangenen Nachrichten erkannt wird, dass ein Nachrichtensender innerhalb einer vorgebbaren Dauer nacheinander wenigstens zwei Nachrichten an unterschiedliche Nachrichtenempfänger sendet, die Länge und/oder der Inhalt der Nachrichteninhalte der Nachrichten erfasst wird, bei identischer Länge und/oder Gleichheit der Nachrichteninhalte eine Information zur zumindest netzwerkseitigen Gruppierung des Nachrichtensenders und der Nachrichtenempfänger erzeugt wird, der Gruppierungsinformation die Kontaktierungsinformationen der jeweiligen Nachrichtenempfänger und/oder Nachrichtensender sowie Individualinformationen der jeweiligen Nachrichtenempfänger und/oder Nachrichtensender zugeordnet werden, die Nachrichten mit der Gruppierungsinformation versehen werden und die Nachrichten unter Nutzung der Gruppierungsinformation und zumindest der Kontaktierungsinformation der jeweiligen Nachrichtenempfänger und/oder Nachrichtensender an die Nachrichtenempfänger weitergeleitet werden.

Der Erfindung macht sich die Erkenntnis zunutze, dass durch eine netzwerksseitige Detektierung und/oder Identifizierung einer von einem Nachrichtensender an wenigstens zwei Nachrichtenempfänger versendeten Nachricht als Gruppennachricht und anschließender Hinzufügung und/oder Bereitstellung einer zumindest netzwerkseitig eine Gruppierung des Nachrichtensenders und der Nachrichtenempfänger ermöglichenden Gruppierungsinformation auf einfache und kostengünstige Art und Weise eine Nachrichtenübermittlung mit Gruppenkommunikationsfunktionalität realisierbar ist, ohne dass Änderungen seitens der von Nachrichtensendem und/oder Nachrichtenempfängern genutzten Endgeräte erforderlich sind. Neben dem Vorteil, dass keine Änderungen seitens der genutzten Endgeräte erforderlich sind, müssen entsprechende Nutzer des Dienstes diesen nicht extra - auch nicht im voraus - bei einem entsprechenden Dienstanbieter abbonieren. Darüber hinaus sind durch die Zuordnung der Kontaktierungsinformationen und von Individualinformationen der jeweiligen Nachrichtenempfänger und/oder des Nachrichtensenders zu der Gruppierungsinformation die Handhabung und die Nutzung einer erfindungsgemäßen Gruppenkommunikation komfortabler und benutzerfreundlicher gestaltbar.

Eine vorteilhafte Ausgestaltung der Erfindung ist gekennzeichnet durch einen zwischen dem Telekommunikationsnetzwerk und dem Nachrichtensender im Rahmen der Informationszuordnung erfolgenden Dialog zur Erfassung von Individualinformationen der jeweiligen Nachrichtenempfänger. Vorteilhafterweise werden im Rahmen des Dialogs zur Erfassung von Individualinformationen der jeweiligen Nachrichtenempfänger die Individualinformationen der jeweiligen Nachrichtenempfänger von dem Nachrichtensender manuell eingegeben und/oder aus einer von dem Nachrichtensender genutzten Datenbank übernommen. Vorteilhafterweise ist der Dialog telekommunikationsnetzseitig automatisiert ausgebildet und/oder initiiert.

Eine konkrete Ausgestaltung der Erfindung sieht vor, dass das Telekommunikationsnetz nach erfindungsgemäßer Gruppierung dem Nachrichtensender mittels des Nachrichtendienstes eine Nachricht sendet, die den Nachrichtensender auffordert, zu den Kontaktierungsinformationen der jeweiligen Nachrichtenempfänger Individualinformationen zu den jeweiligen Nachrichtenempfängern einzugeben, die dann der Gruppierungsinformation zugeordnet werden. Die Eingabe der Individualinformationen erfolgt vorteilhafterweise durch manuelle Eingaben des Nachrichtensenders, vorzugsweise seitens des von dem Nachrichtensender im Telekommunikationsnetz genutzten Endgerätes, und/oder durch Übernahme entsprechender Individualinformationen der Nachrichtenempfänger aus einer von dem Nachrichtensender genutzten Datenbank. Die Datenbank mit Individualinformationen ist vorteilhafterweise eine Datenbank seitens des von dem Nachrichtensender im Telekommunikationsnetz genutzten Endgerätes, vorzugsweise eine von einer sogenannten Adressbuchfunktionalität des Endgerätes genutzte Datenbank seitens des Endgerätes, und/oder eine über das Telekommunikationsnetz erreichbare Datenbank eines entsprechende Individualinformationen für den Nachrichtensender verwaltenden Diensteanbieters.

Der Dialog zur Erfassung von Individualinformationen der jeweiligen Nachrichtenempfänger erfolgt vorteilhafterweise mittels eines Nachrichtendienstes des Telekommunikationsnetzes, vorzugsweise mittels SMS oder MMS als Nachrichtendienst. In einer besonders bevorzugten Ausgestaltung der Erfindung wird ein SyncML zur Datensynchronisation einsetzender Nachrichtendienst verwendet.

Vorteilhafterweise weist die Individualinformation des jeweiligen Nachrichtenempfängers und/oder Nachrichtensenders wenigstens einen Namen des jeweiligen Nachrichtenempfängers und/oder Nachrichtensenders auf.

Eine weitere Ausgestaltung der Erfindung sieht vor, dass die Informationszuordnung seitens einer Datenbank des Netzknotens und/oder seitens einer über den Netzknoten erreichbaren Datenbank des Telekommunikationsnetzes erfolgt.

Die Nachrichten werden gemäß einem weiteren Vorschlag der Erfindung unter Nutzung der Gruppierungsinformation, der Kontaktierungsinformation der jeweiligen Nachrichtenempfänger und/oder Nachrichtensender sowie der Individualinformation der jeweiligen Nachrichtenempfänger und/oder Nachrichtensender an die Nachrichtenempfänger weitergeleitet.

Eine besonders vorteilhafte Ausgestaltung der Erfindung sieht vor, dass wenigstens ein Teil der Individualinformation eines Nachrichtenempfängers und/oder eines Nachrichtensenders als Kontaktierungsinformation des Nachrichtenempfängers und/oder des Nachrichtensenders genutzt wird. Vorteilhafterweise kann so beispielsweise der lokale Teil (local part) einer aus lokalem Teil (local part) und globalem Teil (domain part) aufgebauten E-Mail (local_part@domain_part) als Individualinformation genutzt werden.

Vorteilhafterweise erfolgt der Vergleich bezüglich der Gleichheit der Nachrichteninhalte unter Nutzung eines mathematischen Algorithmus, vorzugsweise ohne ein Auslesen des Nachrichteninhalts. Eine besonders bevorzugte Ausgestaltung der Erfindung sieht dabei die Bildung eines sogenannten Hash-Wertes mit einer Hash- bzw. Streuwertfunktion, besonders bevorzugt über den Nachrichteninhalt und der Kontaktinformation, insbesondere der Rufnummer (MSISDN) des Nachrichtensenders unter Nutzung eines Hash-Algorithmus vor.

Eine vorteilhafte Ausgestaltung der Erfindung sieht vor, dass der Nachrichteninhalt mit der Gruppierungsinformation versehen wird. Eine bevorzugte Ausgestaltung der Erfindung ist dadurch gekennzeichnet, dass die Kontaktinformation des jeweiligen Nachrichtenempfängers mit der Gruppierungsinformation versehen wird. Das Versehen des Nachrichteninhalts und/oder der Kontaktinformation mit der Gruppierungsinformation macht vorteilhafterweise keine Veränderungen an dem Format und/oder dem Aufbau des Protokolls des für die Nachrichtenübermittlung vorgesehenen Nachrichtendienstes des Telekommunikationsnetzes erforderlich. Seitens des Telekommunikationsnetzwerkes ist vorteilhafterweise eine Einrichtung zur Identifizierung und/oder Extrahierung der Gruppeninformation aus dem entsprechend mit diesem versehenen Nachrichteninhalt und/oder der entsprechend mit dieser versehenen Kontaktinformation vorgesehen.

Eine vorteilhafte Ausgestaltung der Erfindung ist gekennzeichnet durch eine Nutzung der Gruppierungsinformation als Information zur Kontaktierung des Nachrichtensenders im Telekommunikationsnetz. Eine vorteilhafte Ausgestaltung der Erfindung ist gekennzeichnet durch eine Nutzung der Gruppierungsinformation von auf die Nachricht antwortenden Nachrichtenempfängern als Information zur Kontaktierung des Nachrichtensenders und/oder anderer Nachrichtenempfänger im Telekommunikationsnetz. Vorteilhafterweise ist die Gruppierungsinformation eine Rufnummer im Telekommunikationsnetz, vorzugsweise eine MSISDN (MSISDN: Mobile Subscriber ISDN; ISDN: Integrated Services Digital Network). Vorteilhafterweise wird eine entsprechende Rufnummer als Gruppierungsinformation für eine erfindungsgemäße Nachrichtenübermittlung mit Gruppenkommunikationsfunktionalität von dem Telekommunikationsnetzwerk bereitgestellt und in beziehungsweise mit diesem verwaltet.

Eine weitere vorteilhafte Ausgestaltung der Erfindung sieht eine Nutzung der Gruppierungsinformation zur Abrechnung von Nutzungen des Nachrichtendienstes des Telekommunikationsnetzes vor, vorzugsweise für eine gebührenreduzierte Abrechnung von Nutzungen des Nachrichtendienstes des Telekommunikationsnetzes. Vorteilhafterweise wird so ein weiterer Anreiz zur Nutzung einer erfindungsgemäßen Gruppenfunktionalität zur Übermittlung von Nachrichten in Telekommunikationsnetzen sowohl für entsprechende Diensteanbieter, insbesondere Provider wie Mobilfunknetzbetreiber, als auch den Nutzer des Dienstes.

Eine besonders bevorzugte Ausgestaltung der Erfindung ist gekennzeichnet durch einen vor der Erzeugung der Gruppierungsinformation zwischen dem Telekommunikationsnetzwerk und dem Nachrichtensender erfolgenden Dialog zur Aktivierung beziehungsweise Ablehnung der Gruppierung. Vorteilhafterweise erfolgt der Dialog mittels eines Nachrichtendienstes des Telekommunikationsnetzes. Vorteilhafterweise ist der Dialog telekommunikationsnetzseitig automatisiert ausgebildet und/oder initiiert. Eine konkrete Ausgestaltung der Erfindung sieht vor, dass das Telekommunikationsnetz nach erfindungsgemäßer Detektierung des Wunsches eines Nachrichtensender eine Gruppennachricht, also eine Nachricht eines Nachrichteninhaltes an wenigstens zwei unterschiedliche Nachrichtenempfänger, zu versenden dem Nachrichtensender mittels des Nachrichtendienstes eine Nachricht sendet, die dem Nachrichtensender mitteilt, dass das Versenden einer Gruppennachricht erkannt wurde und dem Nutzer zur Aktivierungsauswahl die Nutzung der erfindungsgemäßen Gruppenfunktionalität durch Bereitstellung einer Gruppierungsinformation anbietet. Auf die Aktivierungsauswahl kann der Nutzer dann vorteilhafterweise mit einer Antwortnachricht reagieren und die Gruppenfunktionalität für die Nachrichtenübermittlung aktivieren, vorzugsweise mit einer Nachricht an das Telekommunikationsnetz, welche vorteilhafterweise mit einem Nachrichtendienst an das Telekommunikationsnetz gesendet wird.

Eine bevorzugte Ausgestaltung der Erfindung ist gekennzeichnet durch einen Kurzmitteilungsdienst (SMS) als Nachrichtendienst des Telekommunikationsnetzes.

Eine weitere Ausgestaltung der Erfindung sieht die Nutzung eines in einem Telekommunikationsnetz betreibbaren Endgerätes, vorzugsweise in Form eines in einem Mobilfunknetz betreibbaren mobilen Endgerätes, seitens des Nachrichtensenders und/oder der Nachrichtenempfänger vor.

Zur technischen Lösung der eingangs genannten Aufgabe wird mit der vorliegenden Erfindung ferner ein Netzknoten in einem Telekommunikationsnetz, vorzugsweise einem Mobilfunknetz gemäß einem GSM-, GPRS- und/oder UMTS-Funknetzstandard, welcher an der Übermittlung von Nachrichten in dem Telekommunikationsnetz mittels eines Nachrichtendienstes des Telekommunikationsnetzes beteiligt ist und wenigstens eine Einheit zum Empfangen von einen Nachrichteninhalt und wenigstens eine Information zur Kontaktierung eines Nachrichtenempfängers in einem Telekommunikationsnetz aufweisenden Nachrichten aufweist, vorgeschlagen, welcher gekennzeichnet ist durch, wenigstens eine Einheit zur Erkennung, dass ein Nachrichtensender Innerhalb einer vorgebbaren Dauer nacheinander wenigstens zwei Nachrichten an unterschiedliche Nachrichtenempfänger sendet, wenigstens eine Einheit zur Erfassung der Länge und/oder des Inhalts der Nachrichteninhalte der Nachrichten, wenigstens einer Einheit zum Vergleichen der Länge und/oder der Gleichheit der Nachrichteninhalte, wenigstens einer Einheit zum Erzeugen einer Information zur zumindest netzwerkseitigen Gruppierung des Nachrichtensenders und der Nachrichtenempfänger, bei identischer Länge und/oder Gleichheit der Nachrichteninhalte, wenigstens einer Einheit zum Zuordnen von Kontaktierungsinformationen der jeweiligen Nachrichtenempfänger und/oder Nachrichtensender sowie Individualinformationen der jeweiligen Nachrlchtenempfänger und/oder Nachrichtensender zu der Grupplerungsinformation,einer Einheit zum Versehen der Nachrichten mit der Gruppierungsinformation und wenigstens einer Einheit zum Weiterleiten der Nachrichten unter Nutzung der Grupplerungsinformation und zumindest der Kontaktierungsinformation der jeweiligen Nachrichtenempfänger und/oder Nachrichtensender an die Nachrichtenempfänger.

Vorteilhafterweise ist der Netzknoten ausgebildet und/oder eingerichtet, die durch den Netzknoten auszuführenden Verfahrensschritte eines erfindungsgemäßen Verfahrens auszuführen. Vorteilhafterweise ist der erfindungsgemäße Netzknoten eine Vermittlungseinrichtung für den Nachrichtendienst des Telekommunikationsnetzes, vorzugsweise ein SMSC für die Übermittlung von Nachrichten mittels SMS. Eine weitere Ausgestaltung der Erfindung sieht vor, dass der Netzknoten eine Servereinrichtung für den Nachrichtendienst des Telekommunikationsnetzes ist beziehungsweise diese nutzend aufweist. Vorteilhafterweise ist die Recheneinrichtung von einem dem SMSC vorgeschalteten Netzknoten, welcher ausgebildet ist, die für die erfindungsgemäße Verfahrensführung zu filternden Information herauszufiltern und/oder zu verarbeiten. In einer weiteren Ausgestaltung übernimmt die Recheneinrichtung die Funktionen und/oder Aufgaben des SMSC.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Prinzipdarstellung eine erfindungsgemäße Übermittlung von Nachrichten in einem Telekommunikationsnetz;
- Fig. 2: in einer schematischen Prinzipdarstellung ein Ausführungsbeispiel eines Dialogs zwischen einem Nachrichtensender und einem Telekommunikationsnetz zur Aktivierung einer erfindungsgemäßen Gruppenkommunikationsfunktionalität im Rahmen einer erfindungsgemäßen Nachrichtenübermittlung;
- Fig. 3: in einer schematischen Prinzipdarstellung ein Ausführungsbeispiel einer Nachrichtenübermittlung im Rahmen einer erfindungsgemäßen Nachrichtenübermittlung;
- Fig. 4: in einer schematischen Prinzipdarstellung ein Ausführungsbeispiel einer Nachrichtenübermittlung im Rahmen einer erfindungsgemäßen Nachrichtenübermittlung mit Individualinformationen und
- Fig. 5: in einem Flussablaufdiagramm ein Ausführungsbeispiel eines erfindungsgemäßen Dialogs zwischen einem Nachrichtensender und einem Telekommunikationsnetz zur Erfassung von Individualinformationen von Nachrichtenempfängern im Rahmen einer erfindungsgemäßen Nachrichtenübermittlung.

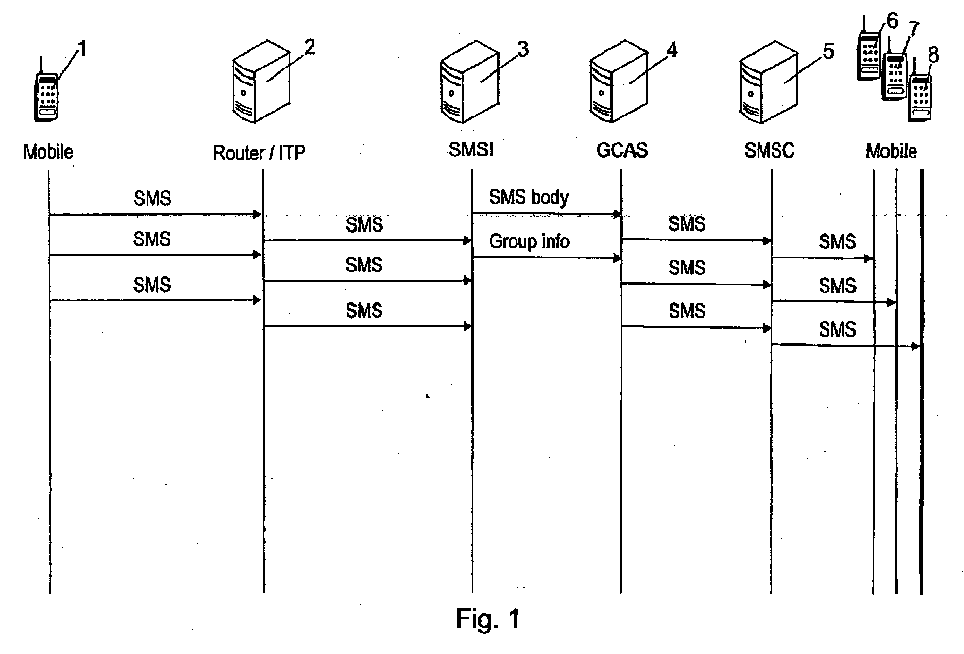

Fig. 1 zeigt das Endgerät 1 eines Nachrichtensenders 1 sowie Endgeräte 6, 7, und 8 von Nachrichtenempfängern 6, 7 und 8 in einem Telekommunikationsnetz 13, vorliegend einem Mobilfunknetz 13 gemäß einem GSM-, GPRS- und/oder UMTS-Funknetzstandard. Die Endgeräte 1, 6, 7 und 8 sind vorliegend in dem Mobilfunknetz 13 betreibbare mobile Endgeräte in Form von Mobilfunktelefonen. Ferner zeigt Fig. 1 seitens des Mobilfunknetzes 13 für die Übermittlung von Nachrichten in dem beziehungsweise über das Mobilfunknetz 13 vorgesehene und eingerichtete Einrichtungen 2, 3, 4 und 5 des Mobilfunknetzes 13, vorliegend einen Router/ITP 2, eine Recheneinrichtung 3, vorliegend SMSI genannt (SMSI: SMS Interception; SMS: Short Message Service), zur Detektierung einer Gruppennachricht, eine Recheneinrichtung 4, vorliegend GCSA genannt (GCSA: GroupCom Application Server), zur Erzeugung einer Gruppierungsinformation und Versehung eines des Inhalts einer zu übermittelnden Nachrichten mit der Gruppierungsinformation und einer Vermittlungseinrichtung SMSC 5. Die Einrichtungen 2, 3, 4 und 5 können dabei als separate Einrichtungen und/oder als eine Einrichtung von einer Recheneinrichtung realisiert beziehungsweise funktionalisiert sein.

Seitens des Mobilfunktelefons 1 eines Nachrichtensenders 1 wird in bekannter Art und Weise eine mittels eines Nachrichtendienstes des Mobilfunknetzes 13, vorliegend SMS, übermittelbare Nachricht erzeugt und über das Mobilfunknetz 13 an mehrere Nachrichtenempfänger 6, 7 und 8 beziehungsweise dessen Engeräte 6, 7 und 8 gesendet. Die seitens des Mobilfunktelefons 1 des Nachrichtensenders 1 erzeugte Nachricht weist dabei für jeden Nachrichtenempfänger 6, 7 und 8 einen identischen Nachrichteninhalt und für jeden der Nachrichtenempfänger 6, 7 und 8 jeweils eine Information zur Kontaktierung des Nachrichtenempfänger 6, 7 beziehungsweise 8 in dem Mobilfunknetz 13 auf.

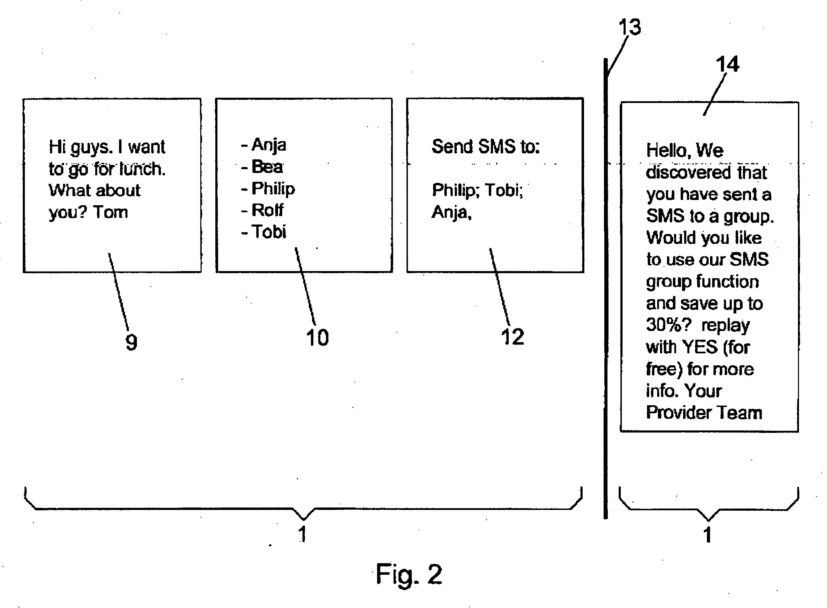

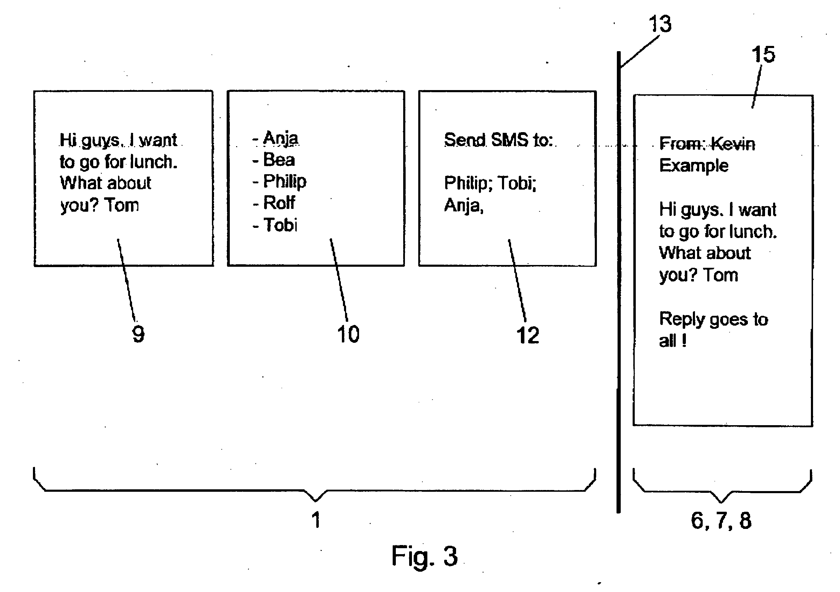

Fig. 2 und Fig. 3 zeigen ein Ausführungsbeispiel einer entsprechenden Nachrichtenerzeugung seitens des Mobilfunktelefons 1 eines Nachrichtensenders 1. Dabei wird seitens des Mobilfunktelefons 1 in Verfahrensschritt 9 mittels einer seitens des Mobilfunktelefons 1 ausgeführten Editoranwendung ein Nachrichteninhalt, vorliegend "Hi guys. I want to go for lunch. What about you? Tom", erzeugt. In Verfahrensschritt 10 werden aus einer seitens des Mobilfunktelefons 1 unterhaltenen Datenbank, vorliegend einem sogenannten PhoneBook, Kontaktinformationen möglicher Nachrichtenempfänger 6, 7 und 8, vorliegend deren Rufnummern (MSISDNs) im Mobilfunknetz 13 ausgewählt. Die aus Nachrichteninhalt und der Kontaktinformation der jeweiligen Nachrichtenempfänger 6, 7 und 8 bestehenden Nachrichten werden dann in Verfahrensschritt 12 von dem Mobilfunktelefon 1 an die jeweiligen Nachrichtenempfänger 6, 7 und 8, vorliegend "Philip", "Tom" und "Anja" gesendet. Dabei übermittelt das Mobilfunktelefon 1 die Nachrichten an das Mobilfunknetz 13.

Fig. 1 zeigt die Übermittlung der Nachrichten an die jeweiligen Nachrichtenempfänger 6, 7 und 8. Dabei sendet der Nachrichtensender 1 die Nachrichten von seinem Mobilfunktelefon 1 aus mittels des Nachrichtendienstes, vorliegend mittels SMS, an das Mobilfunknetz 13, vorliegend exemplarisch an den Router 2 des Mobilfunknetzes 13.

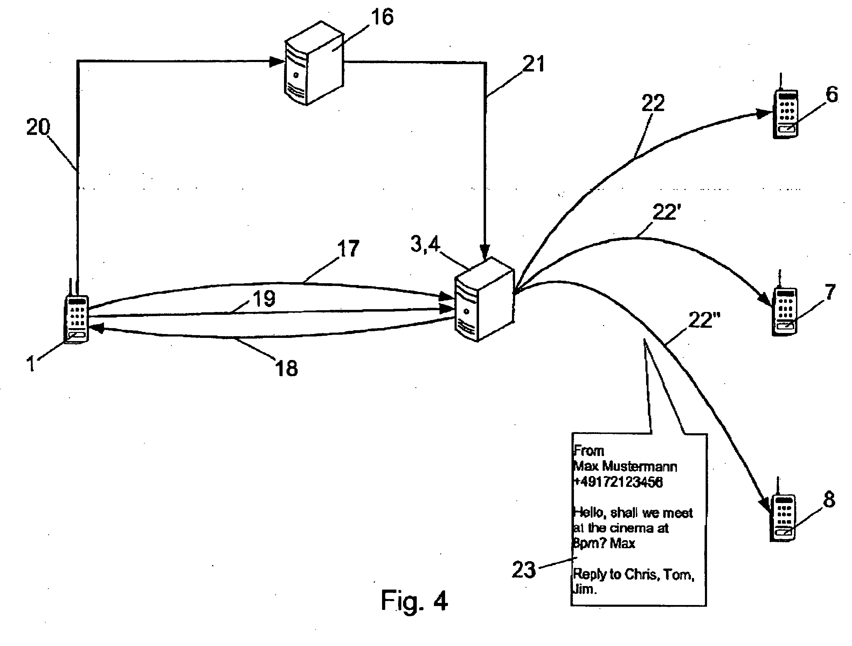

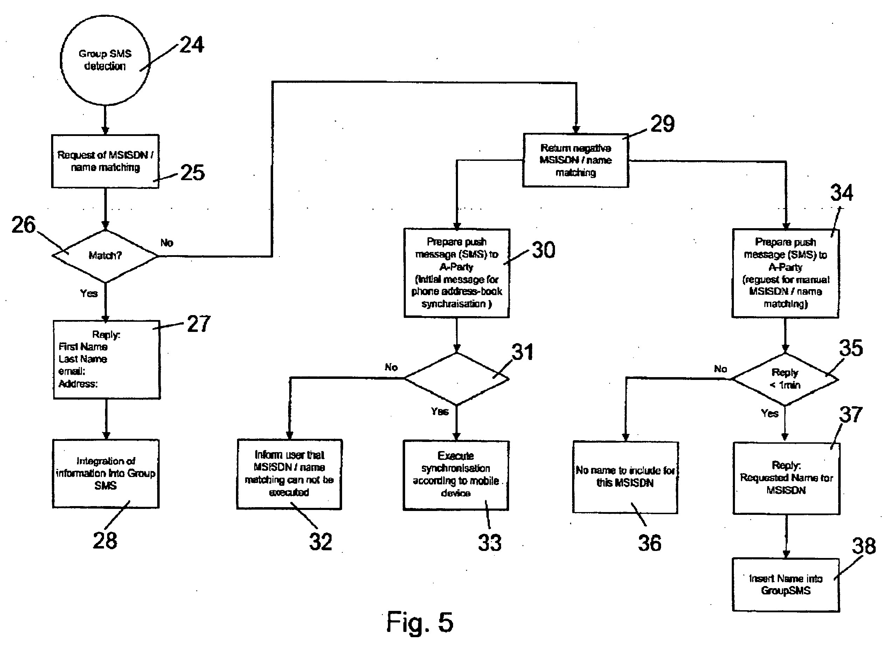

Seitens des Routers/ITP 2 des Mobilfunknetzes 13 werden die Nachrichten an die Nachrichtenempfänger 6, 7 und 8 im Rahmen der Nachrichtenübermittlung im Mobilfunknetz 13 an die Recheneinrichtung 3 (SMSI) zur Detektierung einer Gruppennachricht übermittelt. Seitens der Recheneinrichtung 3 (SMSI) wird anhand der empfangenen Nachrichten erkannt wird, dass der Nachrichtensender 1 vorliegend innerhalb einer vorgebbaren Dauer nacheinander drei Nachrichten an unterschiedliche Nachrichtenempfänger 6, 7 und 8 sendet. Die Recheneinrichtung 3 (SMSI) erfasst dann die Länge und/oder den Inhalt der Nachrichteninhalte der Nachrichten. Bei identischer Länge und/oder Gleichheit der Nachrichteninhalte der Nachrichten erzeugt dann eine Recheneinrichtung 4 (GCAS) eine Information zur zumindest netzwerkseitigen Gruppierung des Nachrichtensenders 1 und der Nachrichtenempfänger 6, 7 und 8. Anschließend versieht die Recheneinrichtung 4 (GCAS) die Nachrichten mit der Gruppierungsinformation. Der Gruppierungsinformation werden dabei, wie im Zusammenhang mit Fig. 4 und Fig. 5 noch näher erläutert, die Kontaktierungsinformationen der jeweiligen Nachrichtenempfänger 6, 7, 8 und des Nachrichtensenders 1 sowie Individualinformationen der jeweiligen Nachrichtenempfänger 6, 7, 8 und des Nachrichtensenders 1, wie beispielsweise der Name der jeweiligen Nachrichtenempfänger 6, 7 und 8 sowie des Nachrichtensenders 1, zugeordnet. Die mit der Gruppierungsinformation versehenen Nachrichten werden unter Nutzung der Gruppierungsinformation und der Kontaktierungsinformation der jeweiligen Nachrichtenempfänger 6, 7 und 8 von der Recheneinrichtung 4 (GCAS) an die für die Nachrichtenübermittlung mittels des Nachrichtendienstes SMS im Mobilfunknetz 13 vorgesehene und eingerichtete Vermittlungseinrichtung 5 des Mobilfunknetzes 13, vorliegend ein SMSC 5, übermittelt. Von dem SMSC 5 des Mobilfunknetzes 13 werden die Nachrichten dann mit der Gruppierungsinformation an die Mobilfunktelefone 6, 7 und 8 der Nachrichtenempfänger 6, 7 und 8 weitergeleitet.

Die Gruppierungsinformation ist vorliegend eine Rufnummer MSISDN im Mobilfunknetz 13, welche das Mobilfunknetz 13 zur Verfügung stellt und die von auf die Nachricht antwortenden Nachrichtenempfängern 6, 7 oder 8 als zur Kontaktierung des Nachrichtensenders 1 und/oder anderer Nachrichtenempfänger 6, 7 oder 8 im Mobilfunknetz 13 nutzbar ist. Vorteilhafterweise ist ferner wenigstens ein Teil der Individualinformation eines Nachrichtenempfängers 6, 7, 8 und/oder des Nachrichtensenders 1 als Kontaktierungsinformation des Nachrichtenempfängers 6, 7, 8 und des Nachrichtensenders 1 nutzbar, insbesondere nach Erfassung der Individualinformationen von Nachrichtenempfängern 6, 7, 8 beziehungsweise des Nachrichtensenders 1 entsprechend dem in Fig. 4 und Fig. 5 dargestellten Dialogen zur Erfassung von Individualinformationen der jeweiligen Nachrichtenempfänger 6, 7, 8 beziehungsweise des Nachrichtensenders 1. Die Nachrichtenübermittlung unter Nutzung der Gruppierungsinformation bewirkt dabei eine gebührenreduzierte Abrechnung von Nutzungen des Nachrichtendienstes SMS des Mobilfunknetzes 13. Vorteilhafterweise wird dabei mit und/oder durch die Nutzung der Gruppierungsinformation eine entsprechende Abrechnungsinformation in dem sogenannten CDR (CDR: Call Detail Record) des Mobilfunknetzes für die Rufnummern (MSISDNs) der beteiligten Gruppenkommunikationspartner 1, 6, 7 und 8 gesetzt beziehungsweise aktiviert.

Fig. 2 zeigt einen Dialog zwischen dem Mobilfunktelefon 1 und dem Mobilfunknetz 13 zur Aktivierung der Gruppenkommunikationsfunktionalität. Dabei sendet das Mobilfunknetz 13 an das Mobilfunktelefon 1 bei mobilfunknetzseitiger Detektierung einer zu übermittelnden Gruppennachricht durch die Recheneinrichtung 3 (SMSI) des Mobilfunknetzes 13 automatisch eine Nachricht, vorliegend "Hello. We discovered that you have sent a SMS to a group. Would you like to use ors SMS group function and save up to 30%? Replay with YES (for free) for more info. Your Provider Team", an das Mobilfunktelefon 1 zur Aktivierungsauswahl, wie in Fig. 2 durch den mit 14 gekennzeichneten Verfahrensschritt dargestellt.

Fig. 3 zeigt in Verfahrensschritt 15 den Empfang der mit der Gruppierungsinformation versehenen übermittelten Nachricht des Nachrichtensenders 1 ("Kevin"), vorliegend "From Kevin Example Hi guys. I want to go for lunch. What about you? Tom Reply goes to all!" seitens der jeweiligen Nachrichtenempfänger 6, 7 und 8. Auf die Nachricht können die Nachrichtenempfänger 6, 7 und 8 unter Nutzung der Gruppierungsinformation an die Kommunikationspartnern, also dem Nachrichtensender 1 und den Nachrichtenempfängern 6, 7 oder 8, antworten und die so von dem Mobilfunknetz 13 angebotene Gruppierungsfunktionalität nutzen.

Die erfindungsgemäße Gruppierung ist vorliegend über zwei unterschiedliche Prozesse einleitbar. Zum einen wird bei einem Versenden einer Nachricht mittels des Nachrichtendienstes des Telekommunikationsnetzes, vorliegend einer SMS-Nachricht, an verschiedene Nachrichtenempfänger von einer netzwerkseitig in die Nachrichtenübermittlung dazwischen geschaltete Recheneinrichtung, vorliegend vorzugsweise einem Server, erkannt, dass es sich hierbei um eine an eine Gruppe gerichtete Nachricht (SMS) handelt. Die Nummern der Nachrichtenempfänger und des Nachrichtensenders werden automatisch zusammengefasst und zu einer Gruppe ausgebildet, wobei die Gruppe zur eindeutigen Identifizierung eine als Gruppierungsinformation genutzte Mobilfunkrufnummer, eine sogenannte Gruppenrufnummer, erhält. Mittels dieser Mobilfunknummer (Gruppenrufnummer) ist dann eine eindeutige Zuordnung zu den Gruppenmitgliedern ermöglicht. Neben einer automatischen Gruppeninitiierung via SMS ist es ferner ermöglicht, eine Gruppe mit Hilfe eines Computerprogramms, welches Zugriff auf den Gruppenserver gestattet, zu bilden. Im Rahmen dieser Gruppierungsmöglichkeit können äußerst komfortabel Gruppenmitglieder mit ihren Mobilfunknummern eingegeben und unter einem Stichwort für eine spätere Verwendung gespeichert werden.

Fig. 4 zeigt die im Zusammenhang mit Fig. 1, Fig. 2 und Fig. 3 näher erläuterte Nachrichtenübermittlung im Zusammenhang mit einer erfindungsgemäßen Erfassung, Zuordnung und Nutzung von Individualinformationen.

In Verfahrensschritt 17 wird anhand der seitens der Recheneinrichtungen 3, 4 des Telekommunikationsnetzes 13 von dem Nachrichtensender 1 empfangenen Nachrichten erkannt, dass der Nachrichtensender 1 innerhalb einer vorgebbaren Dauer nacheinander eine Nachricht mit identischer Länge und/oder gleichem Nachrichteninhalt an drei Nachrichtenempfänger 6, 7 und 8 senden möchte. In Verfahrensschritt 18 sendet die Recheneinrichtung 3 beziehungsweise 4 über das Telekommunikationsnetz 13 eine Nachricht an den Nachrichtensender 1 mit dem Hinweis das die Möglichkeit einer Gruppennachrichtenversendung detektiert wurde und bittet um Bestätigung beziehungsweise Aktivierungsauswahl bezüglich einer erfindungsgemäßen Gruppierung. In Verfahrensschritt 19 sendet der Nachrichtensender 1 eine entsprechende Aktivierungsauswahl für eine erfindungsgemäße Gruppennachrichtenversendung über das Telekommunikationsnetz 13 an die Recheneinrichtung 3 beziehungsweise 4.

Bei erfolgter Aktivierungsauswahl entsprechend Verfahrensschritt 19 wird in dem mit dem Bezugszeichen 21 gekennzeichneten Verfahrensschritt von der Recheneinrichtung 3 beziehungsweise 4 eine Anfrage nach dem Vorhandensein von Individualinformationen, vorliegend insbesondere einem Namen, für die jeweils als Kontaktierungsinformation genutzte Rufnummer (MSISDN) der für die Gruppennachricht vorgesehenen Nachrichtenempfänger 6, 7 und 8 und/oder des Nachrichtensenders 1 an eine Recheneinrichtung 16 des Telekommunikationsnetzes 13, vorliegend einem HAB Server 16, gerichtet, welche eine Datenbank mit Individualinformationen verwaltet. Bei Vorhandensein von entsprechenden Individualinformationen werden diese der Recheneinrichtung 3 beziehungsweise 4 mitgeteilt und der Gruppierungsinformation zugeordnet.

Die Individualinformationen werden seitens der Recheneinrichtung 16 beziehungsweise seitens der von der Recheneinrichtung 16 verwalteten Datenbank über den in Fig. 4 mit dem Bezugszeichen 20 gekennzeichneten Verfahrensschritt erfasst. Dabei kann der Nachrichtensender 1 zum einen die von ihm für eine Nachrichtenübermittlung mit der Gruppenfunktionalität zu verwendenden Individualinformationen manuell über sein Endgerät 1 eingeben und seitens der Recheneinrichtung 16 beziehungsweise seitens der von der Recheneinrichtung 16 verwalteten Datenbank speichern oder aber die entsprechenden Individualinformationen aus einer dazu vorgesehenen Datenbank seitens des Endgerätes 1 des Nachrichtensenders 1 entnehmen und an die Recheneinrichtung 16 übertragen. Im vorliegenden Fall ist die Datenbank seitens des Endgerätes 1 des Nachrichtensenders 1 eine von dem Endgerät 1 im Zusammenhang mit einer sogenannten Adressbuchfunktionalität (address book) genutzte Datenbank. Die Eingabe der Individualinformationen in dem Erfassungsschritt 20 kann auf Aufforderung von dem Telekommunikationsnetz 13 als auch selbstständig auf Verlangen durch den Nachrichtensender 1 erfolgen. Weitere Details bezüglich der Erfassung von Individualinformationen werden im Zusammenhang mit dem Ausführungsbeispiel gemäß Fig. 5 näher erläutert.

Die der Gruppierungsinformation in Verfahrensschritt 21 zugeordneten Individualinformationen sind vorliegend dann im Rahmen einer weiteren Nachrichtenübermittlung 22, 22' und 22" als Kontaktierungsinformationen für die Übermittlung der Nachricht 23 an die jeweiligen Nachrichtenempfänger 6, 7 und 8 nutzbar. Dementsprechend sind vorliegend insbesondere die als Individualinformationen zu den jeweiligen Kontaktierungsinformationen (MSISDNs) der Nachrichtenempfänger 6, 7 und 8, erfassten Namen "Chris" (Nachrichtenempfänger 6), "Tom" (Nachrichtenempfänger 7) und "Jim" (Nachrichtenempfänger 8) als Kontaktierungsinformation für eine weitere Nachrichtenübermittlung nutzbar.

Das Flussablaufdiagramm gemäß Fig. 5 zeigt die Erfassung von Individualinformationen von Nachrichtenempfängern im Rahmen einer erfindungsgemäßen Nachrichtenübermittlung. In Verfahrensschritt 24 ist seitens des Telekommunikationsnetzes 13 die erfindungsgemäße Versendung einer Gruppennachricht detektiert. Daraufhin wird in Verfahrensschritt 25 eine Anfrage nach seitens des Telekommunikationsnetzes 13 zu den Kontaktierungsinformationen der Nachrichtenempfänger 6, 7 und 8 der zu versendenden Gruppennachricht, also zu den MSISDNs der der Nachrichtenempfänger 6, 7 und 8 mit und/oder für die Gruppennachricht weiter zu verwendende Individualinformationen, vorliegend insbesondere ein Name der Nachrichtenempfänger 6, 7 und 8 sowie des Nachrichtensenders 1, gestartet. In Verfahrensschritt 26 erfolgt eine entsprechende Überprüfung bezüglich des Vorhandenseins von Individualinformationen.

Sind entsprechende Individualinformationen zu den Kontaktierungsinformationen der Nachrichtenempfänger 6, 7 und 8 sowie dem Nachrichtensender 1 der zu versendenden Gruppennachricht seitens des Telekommunikationsnetzes 13 vorhanden, werden diese in Verfahrensschritt 27 mit einer Antwortnachricht der beziehungsweise den für die Übermittlung der Gruppennachricht vorgesehenen Einrichtungen 3, 4 des Telekommunikationsnetzes 13 mitgeteilt und in Verfahrensschritt 28 in die zu versendende Gruppennachricht eingefügt.

Sind entsprechende Individualinformationen zu den Kontaktierungsinformationen der Nachrichtenempfänger 6, 7 und 8 sowie dem Nachrichtensender 1 der zu versendenden Gruppennachricht seitens des Telekommunikationsnetzes 13 nicht vorhanden, wird selbiges in Verfahrensschritt 29 durch eine entsprechende Antwort detektiert und eine Erfassung von Individualinformationen zu den Kontaktierungsinformationen der Nachrichtenempfänger 6, 7 und 8 und des Nachrichtensenders 1 der zu versendenden Gruppennachricht eingeleitet.

In Verfahrensschritt 30 wird zur Erfassung von Individualinformationen zu den Kontaktierungsinformationen der Nachrichtenempfänger 6, 7 und 8 sowie des Nachrichtensenders 1 der zu versendenden Gruppennachricht über das Telekommunikationsnetz 13 an den Nachrichtensender 1 eine Nachricht, vorliegend eine sogenannte Push message mittels SMS, gesendet, mit welcher dem Nachrichtensender 1 in Verfahrensschritt 31 die Möglichkeit angeboten wird, entsprechende Individualinformationen automatisch aus einer Datenbank seitens seines Endgerätes 1, vorliegend vorteilhafterweise eine im Zusammenhang mit einer sogenannten Adressbuchfunktionalität (address book) genutzte Datenbank, übernehmen zu lassen. Lehnt der Nachrichtensender 1 diese Möglichkeit ab, so wird er in Verfahrensschritt 32 mit einer Nachricht darüber informiert, dass eine Erfassung von Individualinformationen zu den Kontaktierungsinformationen der Nachrichtenempfänger 6, 7 und 8 der zu versendenden Gruppennachricht nicht erfolgen konnte. Nimmt der Nachrichtensender 1 diese Möglichkeit an, so werden in Verfahrensschritt 33 entsprechende Individualinformationen zu den Kontaktierungsinformationen der Nachrichtenempfänger 6, 7 und 8 der zu versendenden Gruppennachricht automatisch aus der Datenbank seitens des Endgerätes 1 übernommen. Entsprechend übernommene Individualinformationen werden dann im Rahmen der weiteren Nachrichtenübermittlung verwendet.

In Verfahrensschritt 34 wird zur Erfassung von Individualinformationen zu den Kontaktierungsinformationen der Nachrichtenempfänger 6, 7 und 8 der zu versendenden Gruppennachricht über das Telekommunikationsnetz 13 an den Nachrichtensender 1 eine Nachricht, vorliegend eine sogenannte Push message mittels SMS, gesendet. Mit der Nachricht wird dem Nachrichtensender 1 mitgeteilt, dass er entsprechende Individualinformationen nunmehr manuell eingeben kann. In Verfahrensschritt 35 wird überprüft, ob innerhalb einer vorgebbaren Zeitdauer eine entsprechende manuelle Eingabe erfolgt.

Erfolgt innerhalb der vorliegend von dem Telkommunikationsnetz 13 vorgebbaren Zeitdauer keine manuelle Eingabe, wird in Verfahrensschritt 36 festgehalten, dass zu den entsprechenden Kontaktierungsinformationen der Nachrichtenempfänger 6, 7 und 8 sowie dem Nachrichtensender 1 keine Individualinformation eingegeben wurde. Die Nachrichtenübermittlung wird dann ohne eine entsprechende Individualinformation fortgesetzt.

Erfolgt innerhalb der vorliegend von dem Telkommunikationsnetz 13 vorgebbaren Zeitdauer eine manuelle Eingabe, wird in Verfahrensschritt 37 von dem Nachrichtensender 1 eine entsprechende Individualinformationen zu den entsprechenden Kontaktierungsinformationen der jeweiligen Nachrichtenempfänger 6, 7 und 8 sowie des Nachrichtensenders 1 aufweisende Nachricht an das Telekommunikationsnetz 13 übertragen. Entsprechend erfasste Individualinformationen werden dann in Verfahrensschritt 38 in die Gruppennachricht eingefügt beziehungsweise der Gruppennachricht zugefügt und im Rahmen der Nachrichtenübermittlung weiter verwendet.

Die in den Figuren der Zeichnung dargestellten und in Zusammenhang mit diesen beschriebenen Ausführungsbeispiele der Erfindung dienen lediglich der Erläuterung der Erfindung und sind für diese nicht beschränkend.

### Bezugszeichenliste

- 1: Nachrichtensender/Endgerät
- 2: Telekommunikationsnetz/Router (ITP)
- 3: Telekommunikationsnetz/SMSI
- 4: Telekommunikationsnetz/GCAS
- 5: Telekommunikationsnetz/SMSC
- 6: Nachrichtenempfänger/Endgerät
- 7: Nachrichtenempfänger/Endgerät
- 8: Nachrichtenempfänger/Endgerät
- 9: Verfahrensschritt/Editieren Nachrichteninhalt
- 10: Verfahrensschritt/Auswahl Nachrichtenempfänger
- 12: Verfahrensschritt/Nachrichtenübermittlung
- 13: Telekommunikationsnetz
- 14: Verfahrensschritt/Dialog (Einladung zur Gruppenfunktionalität)
- 15: Verfahrensschritt/Nachrichtenempfang
- 16: Recheneinrichtung/Server (HAB Server)
- 17: Verfahrensschritt Initiierung Gruppennachricht (Initial Implicit Group SMS)
- 18: Verfahrensschritt Anforderung Bestätigung Gruppennachricht (Request for Confirmation)
- 19: Verfahrensschritt Bestätigung Gruppennachricht (Confirmation Message)
- 20: Verfahrensschritt Synchronisation Individualinformationen (Synchronisation of address book)
- 21: Verfahrensschritt Anforderung Individualinformationen (Request of address book entries for MSISDN's)
- 22: Verfahrensschritt/Nachrichtenübermittlung
- 22': Verfahrensschritt/Nachrichtenübermittlung
- 22": Verfahrensschritt/Nachrichtenübermittlung
- 23: Nachricht
- 24: Verfahrensschritt Detektierung Gruppennachricht (Group SMS detection)
- 25: Verfahrensschritt Anforderung Übereinstimmung Individualinformationen (Request of MSISDN/name matching)
- 26: Verfahrensschritt Übereinstimmungsüberprüfung (Match?)
- 27: Verfahrensschritt Antwort/Bestimmung Individualinformationen (Reply: First Name, Last Name, email:, Address:)
- 28: Verfahrensschritt Einfügung Individualinformationen in Gruppennachricht (Integration of information into Group SMS)
- 29: Verfahrensschritt Erfassung/Ermittlung Individualinformationen (Return negative MSISDN/name matching)
- 30: Verfahrensschritt Erfassung/Ermittlung Individualinformationen aus Datenbank (Prepare push message (SMS) to A-Party (initial message for phone address-book synchronisation)
- 31: Verfahrensschritt Auswahl/Entscheidung
- 32: Verfahrensschritt Mitteilung keine Individualinformationen (Inform user that MSISDN/name matching can not be executed)
- 33: Verfahrensschritt Übermittlung Individualinformationen aus Datenbank (Execute synchronisation according to mobile device)
- 34: Verfahrensschritt Erfassung/Ermittlung Individualinformationen durch manuelle Eingaben (Prepare push message (SMS) to A-Party (request for manual MSISDN/name matching)
- 35: Verfahrensschritt zeitlich bedingte Eingabenerfassung (Reply <1 min)
- 36: Verfahrensschritt keine Individualinformationen einfügbar (No name to include for this MSISDN)
- 37: Verfahrensschritt Antwort/Eingabe angeforderte Individualinformationen (Reply: Requested Name for MSISDN)
- 38: Verfahrensschritt Einfügung Individualinformationen in Gruppennachricht (Insert Name into Group SMS)

## Patentansprüche

1. Verfahren zur Übermittlung von Nachrichten in Telekommunikationsnetzen (13),
vorzugsweise Mobilfunknetzen (13) gemäß einem GSM-, GPRS- und/oder UMTS-Funknetzstandard,
mittels eines Nachrichtendienstes eines Telekommunikationsnetzes (13), wobei
seitens wenigstens eines
an der Nachrichtenübermittlung beteiligten Netzknotens des Telekommunikationsnetzes (13)
für jeden Nachrichtenempfänger (6, 7, 8) einer
einen Nachrichteninhalt und
wenigstens eine Information zur Kontaktierung des Nachrichtenempfängers (6, 7, 8) in einem Telekommunikationsnetz (13) aufweisende Nachricht
empfangen wird,
**dadurch gekennzeichnet,**
**dass**
seitens des Netzknotens anhand der empfangenen Nachrichten erkannt wird, dass ein Nachrichtensender (1) innerhalb einer vorgebbaren Dauer nacheinander wenigstens zwei Nachrichten an unterschiedliche Nachrichtenempfänger (6, 7, 8) sendet,
die Länge und/oder der Inhalt der Nachrichteninhalte der Nachrichten erfasst wird,
bei identischer Länge und/oder Gleichheit der Nachrichteninhalte eine Information zur zumindest netzwerkseitigen Gruppierung des Nachrichtensenders (1) und der Nachrichtenempfänger (6, 7, 8) erzeugt wird,
der Gruppierungsinformation die Kontaktierungsinformationen der jeweiligen Nachrichtenempfänger (6, 7, 8) und/oder Nachrichtensender (1) sowie Individualinformationen der jeweiligen Nachrichtenempfänger (6, 7, 8) und/oder Nachrichtensender (1) zugeordnet werden,
die Nachrichten mit der Gruppierungsinformation versehen werden und
die Nachrichten unter Nutzung der Gruppierungsinformation und zumindest der Kontaktierungsinformation der jeweiligen Nachrichtenempfänger (6, 7, 8) und/oder Nachrichtensender (1) an die Nachrichtenempfänger (6, 7, 8) weitergeleitet werden.

2. Verfahren nach Anspruch 1, **gekennzeichnet durch** einen zwischen dem Telekommunikationsnetzwerk (13) und dem Nachrichtensender (1) im Rahmen der Informationszuordnung erfolgenden Dialog zur Erfassung von Individualinformationen der jeweiligen Nachrichtenempfänger (6, 7, 8).

3. Verfahren nach Anspruch 2, **dadurch gekennzeichnet, dass** im Rahmen des Dialogs zur Erfassung von Individualinformationen der jeweiligen Nachrichtenempfänger (6, 7, 8) die Individualinformationen der jeweiligen Nachrichtenempfänger (6, 7, 8) von dem Nachrichtensender (1) manuell eingegeben und/oder aus einer von dem Nachrichtensender (1) genutzten Datenbank übernommen werden.

4. Verfahren nach Anspruch 2 oder Anspruch 3, **dadurch gekennzeichnet, dass** der Dialog zur Erfassung von Individualinformationen der jeweiligen Nachrichtenempfänger (6, 7, 8) mittels eines Nachrichtendienstes des Telekommunikationsnetzes (13) erfolgt.

5. Verfahren nach einem der Ansprüche 1 bis 4, **dadurch gekennzeichnet, dass** die Individualinformation des jeweiligen Nachrichtenempfängers (6, 7, 8) wenigstens einen Namen des jeweiligen Nachrichtenempfängers (6, 7, 8) aufweist.

6. Verfahren nach einem der Ansprüche 1 bis 5, **dadurch gekennzeichnet, dass** die Informationszuordnung seitens einer Datenbank des Netzknotens und/oder seitens einer über den Netzknoten erreichbaren Datenbank des Telekommunikationsnetzes (13) erfolgt.

7. Verfahren nach einem der Ansprüche 1 bis 6, **dadurch gekennzeichnet, dass** die Nachrichten unter Nutzung der Gruppierungsinformation, der Kontaktierungsinformation der jeweiligen Nachrichtenempfänger (6, 7, 8) und/oder Nachrichtensender (1) sowie der Individualinformation der jeweiligen Nachrichtenempfänger (6, 7, 8) und/oder Nachrichtensender (1) an die Nachrichtenempfänger (6, 7, 8) weitergeleitet werden.

8. Verfahren nach einem der Ansprüche 1 bis 7, **dadurch gekennzeichnet, dass** wenigstens ein Teil der Individualinformation eines Nachrichtenempfängers (6, 7, 8) und/oder eines Nachrichtensenders (1) als Kontaktierungsinformation des Nachrichtenempfängers (6, 7, 8) und/oder des Nachrichtensenders (1) genutzt wird.

9. Verfahren nach einem der Ansprüche 1 bis 8, **dadurch gekennzeichnet, dass** der Nachrichteninhalt mit der Gruppierungsinformation versehen wird.

10. Verfahren nach einem der Ansprüche 1 bis 9, **dadurch gekennzeichnet, dass** die Kontaktinformation des jeweiligen Nachrichtenempfängers (6, 7, 8) mit der Gruppierungsinformation versehen wird.

11. Verfahren nach einem der Ansprüche 1 bis 10, **gekennzeichnet durch** eine Nutzung der Gruppierungsinformation als Information zur Kontaktierung des Nachrichtensenders (1) im Telekommunikationsnetz (13).

12. Verfahren nach einem der Ansprüche 1 bis 11, **gekennzeichnet durch** eine Nutzung der Gruppierungsinformation von auf die Nachricht antwortenden Nachrichtenempfängern (6, 7, 8) als Information zur Kontaktierung des Nachrichtensenders (1) und/oder anderer Nachrichtenempfänger (6, 7, 8) im Telekommunikationsnetz (13).

13. Verfahren nach einem der Ansprüche 1 bis 12, **dadurch gekennzeichnet, dass** die Gruppierungsinformation eine Rufnummer (MSISDN) im Telekommunikationsnetz (13) ist.

14. Verfahren nach einem der Ansprüche 1 bis 12, **gekennzeichnet durch** eine Nutzung der Gruppierungsinformation zur Abrechnung von Nutzungen des Nachrichtendienstes des Telekommunikationsnetzes (13), vorzugsweise für eine gebührenreduzierte Abrechnung von Nutzungen des Nachrichtendienstes des Telekommunikationsnetzes (13).

15. Verfahren nach einem der Ansprüche 1 bis 14, **gekennzeichnet durch** einen vor der Erzeugung der Gruppierungsinformation zwischen dem Telekommunikationsnetzwerk (13) und dem Nachrichtensender (1) erfolgenden Dialog zur Aktivierung beziehungsweise Ablehnung der Gruppierung.

16. Verfahren nach Anspruch 15, **dadurch gekennzeichnet, dass** der Dialog mittels eines Nachrichtendienstes des Telekommunikationsnetzes (13) erfolgt.

17. Verfahren nach einem der Ansprüche 1 bis 16, **gekennzeichnet, durch** einen Kurzmitteilungsdienst (SMS) als Nachrichtendienst des Telekommunikationsnetzes (13).

18. Verfahren nach einem der Ansprüche 1 bis 17, **gekennzeichnet durch** die Nutzung eines in einem Telekommunikationsnetz (13) betreibbaren Endgerätes (1, 6, 7, 8), vorzugsweise in Form eines in einem Mobilfunknetz (13) betreibbaren mobilen Endgerätes (1, 6, 7, 8), seitens des Nachrichtensenders (1) und/oder der Nachrichtenempfänger (6, 7, 8).

19. Netzknoten in einem Telekommunikationsnetz (13),
vorzugsweise einem Mobilfunknetz gemäß einem GSM-, GPRS- und/oder UMTS-Funknetzstandard,
welcher
an der Übermittlung von Nachrichten in dem Telekommunikationsnetz (13) mittels eines Nachrichtendienstes des Telekommunikationsnetzes (13) beteiligt ist und
wenigstens eine Einheit zum Empfangen von
einen Nachrichteninhalt und
wenigstens eine Information zur Kontaktierung eines Nachrichtenempfängers in einem Telekommunikationsnetz (13) aufweisenden
Nachrichten aufweist,
**gekennzeichnet durch**,
wenigstens eine Einheit zur Erkennung, dass ein Nachrichtensender (1) innerhalb einer vorgebbaren Dauer nacheinander wenigstens zwei Nachrichten an unterschiedliche Nachrichtenempfänger (6, 7, 8) sendet, wenigstens eine Einheit zur Erfassung der Länge und/oder des Inhalts der der Nachrichteninhalte der Nachrichten,
wenigstens einer Einheit zum Vergleichen der Länge und/oder der Gleichheit der Nachrichteninhalte,
wenigstens einer Einheit zum Erzeugen einer Information zur zumindest netzwerkseitigen Gruppierung des Nachrichtensenders (1) und der Nachrichtenempfänger (6, 7, 8), bei identischer Länge und/oder Gleichheit der Nachrichteninhalte,
wenigstens einer Einheit zum Zuordnen von Kontaktierungsinformationen der jeweiligen Nachrichtenempfänger (6, 7, 8) und/oder Nachrichtensender (1) sowie Individualinformationen der jeweiligen Nachrichtenempfänger (6, 7, 8) und/oder Nachrichtensender (1) zu der Gruppierungsinformation,
einer Einheit zum Versehen der Nachrichten mit der Gruppierungsinformation und
wenigstens einer Einheit zum Weiterleiten der Nachrichten unter Nutzung der Gruppierungsinformation und zumindest der Kontaktierungsinformation der jeweiligen Nachrichtenempfänger (6, 7, 8) und/oder Nachrichtensender (1) an die Nachrichtenempfänger (6, 7, 8).

20. Netzknoten nach Anspruch 19, **dadurch gekennzeichnet, dass** dieser ausgebildet und/oder eingerichtet ist, die durch einen Netzknoten auszuführenden Verfahrensschritte eines Verfahrens nach einem der Ansprüche 1 bis 18 auszuführen.

21. Netzknoten nach Anspruch 19 oder Anspruch 20, **dadurch gekennzeichnet, dass** dieser eine Vermittlungseinrichtung (SMSC) für den Nachrichtendienst des Telekommunikationsnetzes (13) ist.

22. Netzknoten nach einem der Ansprüche 19 bis 21, **dadurch gekennzeichnet, dass** dieser eine Servereinrichtung für den Nachrichtendienst des Telekommunikationsnetzes (13) ist.

## Claims

1. A method for the transmission of messages in telecommunication networks (13),
preferably mobile radio networks (13) according to a GSM, GPRS and/or UMTS radio network standard,
by means of a message service of a telecommunication network (13). wherein
a message comprising a message content and
at least one information item for contacting the message receiver (6, 7, 8) in a telecommunication network (13)
is received
for each message receiver (6, 7, 8)
by means of at least one
network node of the telecommunication network (13) which is involved in the message transmission,
**characterized in**
**that**
the network node detects on the base of the received messages that a message sender (1) sends at least two messages successively to different message receivers (6, 7, 8) within a predeterminable period of time,
the length and/or the content of the message contents of the messages is detected,
in case of an identical length and/or an identity of the message contents,
an information item for at least grouping the message sender (1) and the message receivers (6, 7, 8) by the network is generated,
the contacting information of the respective message receivers (6, 7, 8) and/or message senders (1) as well as individual information of the respective message receivers (6, 7, 8) and/or message senders (1) are allocated to the grouping information item,
the messages are provided with the grouping information item and
the messages are transmitted to the message receivers (6, 7, 8) using the grouping information item and at least the contacting information item of the respective message receivers (6, 7, 8) and/or message senders (1).

2. A method according to claim 1, **characterized by** a dialogue which takes place between the telecommunication network (13) and the message sender (1) within the scope of the allocation of information for gathering individual information of the respective message receiver (6, 7, 8).

3. A method according to claim 2, **characterized in that** within the scope of the dialogue for gathering individual information of the respective message receivers (6, 7, 8), the individual information of the respective message receivers (6, 7, 8) are manually entered by the message sender (1) and/or taken over from a data base used by the message sender (1).

4. A method according to claim 2 or claim 3, **characterized in that** the dialogue for gathering individual information of the respective message receivers (6, 7, 8) is realized by means of a message service of the telecommunication network (13).

5. A method according to one of the claims 1 through 4, **characterized in that** the individual information item of the respective message receiver (6, 7, 8) comprises at least a name of the respective message receiver (8, 7, 8).

6. A method according to one of the claims 1 through 5, **characterized in that** the allocation of information is realized by means of a data base of the network node and/or by means of a data base of the telecommunication network (13) which can be reached via the network node.

7. A method according to one of the claims 1 through 6, **characterized in that** the messages are transmitted to the message receivers (6, 7, 8) using the grouping information item, the contacting information item of the respective message receivers (6, 7, 8) and/or message senders (1) as well as the individual information item of the respective message receivers (6, 7, 8) and/or message senders (1).

8. A method according to one of the claims 1 through 7, **characterized in that** at least a part of the individual information item of a message receiver (6, 7, 8) and/or a message sender (1) is used as contacting information item of the message receiver (6, 7, 8) and/or the message sender (1).

9. A method according to one of the claims 1 through 8, **characterized in that** the message content is provided with the grouping information item.

10. A method according to one of the claims 1 through 9, **characterized in that** the contacting information item of the respective message receiver (6, 7, 8) is provided with the grouping information item.

11. A method according to one of the claims 1 through 10, **characterized by** a use of the grouping information item as information item for contacting the message sender (1) in the telecommunication network (13).

12. A method according to one of the claims 1 through 11, **characterized by** a use of the grouping information item by message receivers (6, 7, 8) who reply to the message as information item for contacting the message sender (1) and/or other message receivers (6, 7, 8) in the telecommunication network (13).

13. A method according to one of the claims 1 through 12, **characterized in that** the grouping information item is a call number (MSISDN) in the telecommunication network (13).

14. A method according to one of the claims 1 through 12, **characterized by** a use of the grouping information item for billing utilizations of the message service of the telecommunication network (13), preferably for a charge-reduced billing of utilizations of the message service of the telecommunication network (13).

15. A method according to one of the claims 1 through 14, **characterized by** a dialogue between the telecommunication network (13) and the message sender (1) which takes place before the grouping information item is generated and which serves to activate or refuse the grouping.

16. A method according to claim 15, **characterized in that** the dialogue is realized by means of a message service of the telecommunication network (13).

17. A method according to one of the claims 1 through 16, **characterized by** a short message service (SMS) as message service of the telecommunication network (13).

18. A method according to one of the claims 1 through 17, **characterized by** the use of a terminal (1, 6, 7, 8) which can be operated in a telecommunication network (13), preferably in form of a mobile terminal (1, 6, 7, 8) which can be operated in a mobile radio network (13), by the message sender (1) and/or the message receivers (6, 7, 8).

19. A network node in a telecommunication network (13),
preferably a mobile radio network according to a GSM, GPRS and/or UMTS radio network standard,
which network node
is involved in the transmission of messages in the telecommunication network (13) by means of a message service of the telecommunication network (13) and
comprises at least one unit for receiving
messages which comprise
a message content and
at least one information item for contacting a message receiver in a telecommunication network (13),
**characterized by**
at least one unit for detecting that a message sender (1) sends at least two messages successively to different message receivers (6, 7, 8) within a predeterminable period of time,
at least one unit for detecting the length and/or the identity of the message contents,
at least one unit for comparing the length and/or the identity of the message contents,
at least one unit for generating an information item for at least grouping the message sender (1) and the message receivers (6, 7, 8) by the network in case of an identical length and/or an identity of the message contents,
at least one unit for allocating contacting information of the respective message receivers (6, 7, 8) and/or message senders (1) as well as individual information of the respective message receivers (6, 7, 8) and/or message senders (1) to the grouping information item,
a unit for providing the messages with the grouping information item and
at least one unit for transmitting the messages to the messages receivers (6, 7, 8) using the grouping information item and at least the contacting information item of the respective message receivers (6, 7, 8) and/or message senders (1).

20. A network node according to claim 19, **characterized in that** this one is configured and/or adapted to carry out the method steps of a method according to one of the claims 1 through 18, which method steps shall be carried out by a network node.

21. A network node according to claim 19 or claim 20, **characterized in that** this one is a switchboard device (SMSC) for the message service of the telecommunication network (13).

22. A network node according to one of the claims 19 through 21, **characterized in that** this one is a server device for the message service of the telecommunication network (13).

## Revendications

1. Procédé de transmission de messages dans des réseaux de télécommunication (13),
de préférence des réseaux radio mobile (13) selon un standard de réseau radio GSM, GPRS et/ou UMTS,
par moyen d'un service de messages d'un réseau de télécommunication (13),
dans lequel
un message comprenant un contenu de message et
au moins une information pour contacter le récepteur de messages (6, 7, 8) dans un réseau de télécommunication (13)
est reçu
pour chaque récepteur de messages (6, 7, 8)
par moyen d'au moins un
noeud du réseau de télécommunication (13) qui contribue à la transmission de messages,
**caractérisé en ce**
**que**
le noeud détermine à l'aide des messages reçus qu'un émetteur de messages (1) envoie au moins deux messages successivement à des récepteurs de messages différents (6, 7, 8) dans une période de temps prédéterminable,
la longueur et/ou le contenu des contenus de messages est saisi,
s'il y a une longueur identique et/ou une similarité des contenus de messages,
une information sera générée pour au moins grouper l'émetteur de messages (1) et les récepteurs de messages (6, 7, 8) par le réseau,
les informations de contact des récepteurs de messages respectifs (6, 7, 8) et/ou des émetteurs de messages respectifs (1) ainsi que des informations individuelles des récepteurs de messages respectifs (6, 7, 8) et/ou des émetteurs de messages respectifs (1) sont attribuées à l'information de groupement,
les messages sont pourvus de l'information de groupement et
les messages sont transmis aux récepteurs de messages (6, 7, 8) en utilisant l'information de groupement et au moins l'information de contact des récepteurs de messages respectifs (6, 7, 8) et/ou des émetteurs de messages respectifs (1).

2. Procédé selon la revendication 1, **caractérisé par** un dialogue qui se fait entre le réseau de télécommunication (13) et l'émetteur de messages (1) dans le cadre de l'attribution d'informations pour saisir des informations individuelles des récepteurs de messages respectifs (6, 7, 8).

3. Procédé selon la revendication 2, **caractérisé en ce que** dans le cadre du dialogue pour saisir des informations individuelles des récepteurs de messages respectifs (6, 7, 8), les informations individuelles des récepteurs de messages respectifs (6, 7, 8) sont entrées manuellement par l'émetteur de messages (1) et/ou sont prises d'une base de données utilisée par l'émetteur de messages (1).

4. Procédé selon la revendication 2 ou la revendication 3, **caractérisé en ce que** le dialogue pour saisir des informations individuelles des récepteurs de messages respectifs (6, 7, 8) se fait par l'intermédiaire d'un service de messages du réseau de télécommunication (13).

5. Procédé selon l'une des revendications 1 à 4, **caractérisé en ce que** l'information individuelle du récepteur de messages respectif (6, 7, 8) comprend au moins un nom du récepteur de messages respectif (6, 7, 8).

6. Procédé selon l'une des revendications 1 à 5, **caractérisé en ce que** l'attribution d'informations se fait par moyen d'une base de données du noeud et/ou par moyen d'une base de données du réseau de télécommunication (13) laquelle est accessible par le noeud.

7. Procédé selon l'une des revendications 1 à 6, **caractérisé en ce que** les messages sont transmis aux récepteurs de messages (6, 7, 8) en utilisant l'information de groupement, l'information de contact des récepteurs de messages respectifs (6, 7, 8) et/ou des émetteurs de messages respectifs (1) ainsi que l'information individuelle des récepteurs de messages respectifs (6, 7, 8) et/ou des émetteurs de messages respectifs (1).

8. Procédé selon l'une des revendications 1 à 7, **caractérisé en ce qu'**au moins une partie de l'information individuelle d'un récepteur de messages (6, 7, 8) et/ou d'un émetteur de messages (1) est utilisée en tant que information de contact du récepteur de messages (6, 7, 8) et/ou de l'émetteur de messages (1).

9. Procédé selon l'une des revendications 1 à 8, **caractérisé en ce que** le contenu de message est pourvu de l'information de groupement.

10. Procédé selon l'une des revendications 1 à 9, **caractérisé en ce que** l'information de contact du récepteur de messages respectif (6, 7, 8) est pourvue de l'information de groupement.

11. Procédé selon l'une des revendications 1 à 10, **caractérisé par** une utilisation de l'information de groupement en tant que information pour contacter l'émetteur de messages (1) dans le réseau de télécommunication (13).

12. Procédé selon l'une des revendications 1 à 11, **caractérisé par** une utilisation de l'information de groupement des récepteurs de messages (6, 7, 8) qui répondent au message en tant que information pour contacter l'émetteur de messages (1) et/ou d'autres récepteurs de messages (6, 7, 8) dans le réseau de télécommunication (13).

13. Procédé selon l'une des revendications 1 à 12, **caractérisé en ce que** l'information de groupement est un numéro d'appel (MSISDN) dans le réseau de télécommunication (13).

14. Procédé selon l'une des revendications 1 à 12, **caractérisé par** une utilisation de l'information de groupement pour facturer des utilisations du service de messages du réseau de télécommunication (13), de préférence pour une facturation à tarifs réduits des utilisations du service de messages du réseau de télécommunication (13).

15. Procédé selon l'une des revendications 1 à 14, **caractérisé par** un dialogue entre le réseau de télécommunication (13) et l'émetteur de messages (1) qui a lieu avant la génération de l'information de groupement et qui sert à activer ou refuser le groupement.

16. Procédé selon la revendication 15, **caractérisé en ce que** le dialogue se fait par moyen d'un service de messages du réseau de télécommunication (13).

17. Procédé selon l'une des revendications 1 à 16, **caractérisé par** un service de messages courtes (SMS) en tant que service de messages du réseau de télécommunication (13).

18. Procédé selon l'une des revendications 1 à 17, **caractérisé par** l'utilisation d'un terminal (1, 6, 7, 8) opérable dans un réseau de télécommunication (13), de préférence sous forme d'un terminal mobile (1, 6, 7, 8) opérable dans un réseau radio mobile (13), par l'émetteur de messages (1) et/ou par les récepteurs de messages (6, 7, 8).

19. Noeud dans un réseau de télécommunication (13),
de préférence dans un réseau radio mobile selon un standard de réseau radio GSM, GPRS et/ou UMTS,
lequel
contribue à la transmission de messages dans le réseau de télécommunication (13) par moyen d'un service de messages du réseau de télécommunication (13) et comprend
au moins une unité pour recevoir
des messages qui comprennent
un contenu de message et
au moins une information pour contacter un récepteur de messages dans un réseau de télécommunication (13),
**caractérisé par**
au moins une unité pour détecter qu'un émetteur de messages (1) envoie au moins deux messages successivement à des récepteurs de messages différents (6, 7, 8) dans une période de temps prédéterminable,
au moins une unité pour détecter la longueur et/ou le contenu des contenus de messages des messages,
au moins une unité pour comparer la longueur et/ou la similarité des contenus de messages,
au moins une unité pour générer une information pour au moins grouper l'émetteur de messages (1) et les récepteurs de messages (6, 7, 8) par le réseau s'il y a une longueur identique et/ou une similarité des contenus de messages,
au moins une unité pour attribuer des informations de contact des récepteurs de messages respectifs (6, 7, 8) et/ou des émetteurs de messages respectifs (1) ainsi que des informations individuelles des récepteurs de messages respectifs (6, 7, 8) et/ou des émetteurs de messages respectifs (1) à l'information de groupement,
une unité pour pourvoir les messages de l'information de groupement et
au moins une unité pour transmettre les messages aux récepteurs de messages (6, 7, 8) en utilisant l'information de groupement et au moins l'information de contact des récepteurs de messages respectifs (6, 7, 8) et/ou des émetteurs de messages respectifs (1).

20. Noeud selon la revendication 19, **caractérisé en ce que** celui-ci est configuré et/ou adapté à exécuter les étapes de procédé d'un procédé selon l'une des revendications 1 à 18, les étapes de procédé étant susceptibles d'être exécutées par un noeud.

21. Noeud selon la revendication 19 ou la revendication 20, **caractérisé en ce que** celui-ci est un dispositif de commutation (SMSC) du service de messages du réseau de télécommunication (13).

22. Noeud selon l'une des revendications 19 à 21, **caractérisé en ce que** celui-ci est un dispositif de serveur du service de messages du réseau de télécommunication (13).
